# EUROPEAN PATENT SPECIFICATION

(11) **EP 0 353 767 B1**
(45) Date of publication and mention of the grant of the patent: **21.02.1996**
(21) Application number: 89114445.3
(22) Date of filing: 04.08.1989
(51) Int. Cl.: G11B 5/55

(54) **Detecting sector servo information in a disk system**
Detektieren einer Servosektor-Information in einem Plattensystem
Détection d'une information inscrite sur un secteur d'asservissement dans un système à disques

(30) Priority: 05.08.1988 JP 195725/88
(43) Date of publication of application: 07.02.1990
(73) Proprietor: FUJITSU LIMITED, Kawasaki-shi, Kanagawa 211 (JP)
(72) Inventor: Emori, Teruaki c/o Fujitsu Limited, Kawasaki-shi Kanagawa 211 (JP)
(74) Representative: Sunderland, James Harry

(56) References cited:
- EP-A- 0 146 636
- EP-A- 0 234 957
- EP-A- 0 243 729
- US-A- 4 777 542
- IBM TECHNICAL DISCLOSURE BULLETIN. vol. 30, no. 5, October 1987, NEW YORK US
- pages 239 - 239; "redundant servo identification mark"
- PATENT ABSTRACTS OF JAPAN vol. 6, no. 125 (P-127)(1003) 10 July 1982, & JP-A- 57 50313 (MATSUSHITA) 24 March 1982,

## Description

This invention relates to a method of detecting sector servo information in a disk system.

Such sector servo information is recorded on a disk surface in a recording and reproducing system.

In providing servo information in disk systems, two methods are generally utilised. In a first method, the servo information is recorded on a separate disk or on a separate disk surface and, in a second method, it is recorded, in an interspersed fashion, on the same disk surface as the work data. The present invention is concerned primarily with the second method, in which work data and servo information are arranged in alternating sectors on the same disk surface. This second method is conventionally referred to as the sector servo method.

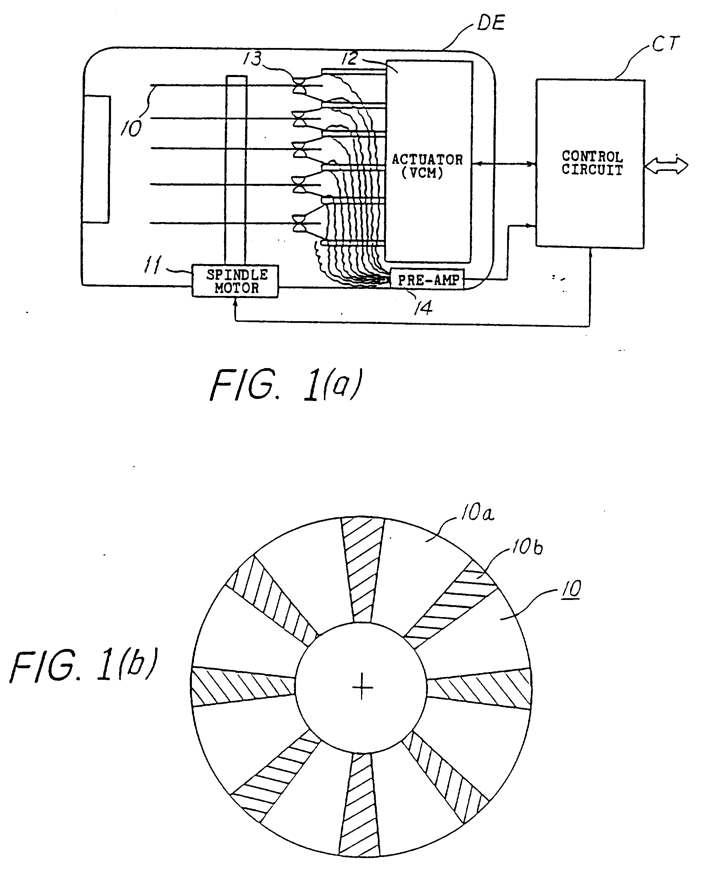

Fig. 1(a) is a schematic and block diagram of a disk system, for assistance in explaining general principles of the sector servo method. The disk system comprises a disk enclosure DE and control circuit CT connected to a higher command system (not shown).

The disk enclosure DE comprises a spindle motor 11 which drives a plurality of disks 10, an actuator 12 which is driven by a voice coil motor (VCM), a plurality of magnetic heads 13 fixed to the actuator 12, and a pre-amplifier 14. Magnetic heads 13 are disposed on both surfaces of each disk 10 and can move within a specified zone on the disk surface with forward and backward movements of the actuator 12. The pre-amplifier 14 is provided to adjust signal levels of outputs of the magnetic heads 13 and the level-adjusted outputs are input to a main amplifier (not shown) during read and write periods of the disk system.

The control circuit CT has functions of controlling, for example, rotational movement of the spindle motor 11, radial positioning of the magnetic heads 13 on the disk surfaces, and controlling read/write operations of the magnetic heads, detection of sector servo information and interface operations with the higher command system.

One surface of a disk 10 is divided into a plurality of sectors, as shown schematically in Fig. 1(b). In the Figure, eight servo information sectors 10b (briefly called servo sectors) are interspersed alternately with 8 work data sectors 10a (briefly called data sectors). Sector servo information includes track address information and servo position information, and further includes supplementary code information such as a code sequence for automatic gain control for the associated circuits and a code sequence for discriminating the servo sector from the data sector.

When the disk system receives a command to access a specified track number on a disk surface, a magnetic head is made to move to the immediate proximity of the target track. After detecting the servo position information of the sector servo information, the magnetic head 13 is controlled to be positioned in accurate alignment with the target track.

In order to read the sector servo information, this servo information should be discriminated at first from the work data also included in a reproduced signal sensed by the magnetic head. A discrimination method utilising dependency on the angular position of the spindle motor 11 is apt to become inaccurate due to changes of rotation of the spindle motor, temperature changes in the disk enclosure DE, etc. Therefore, the following method of discrimination has been previously proposed.

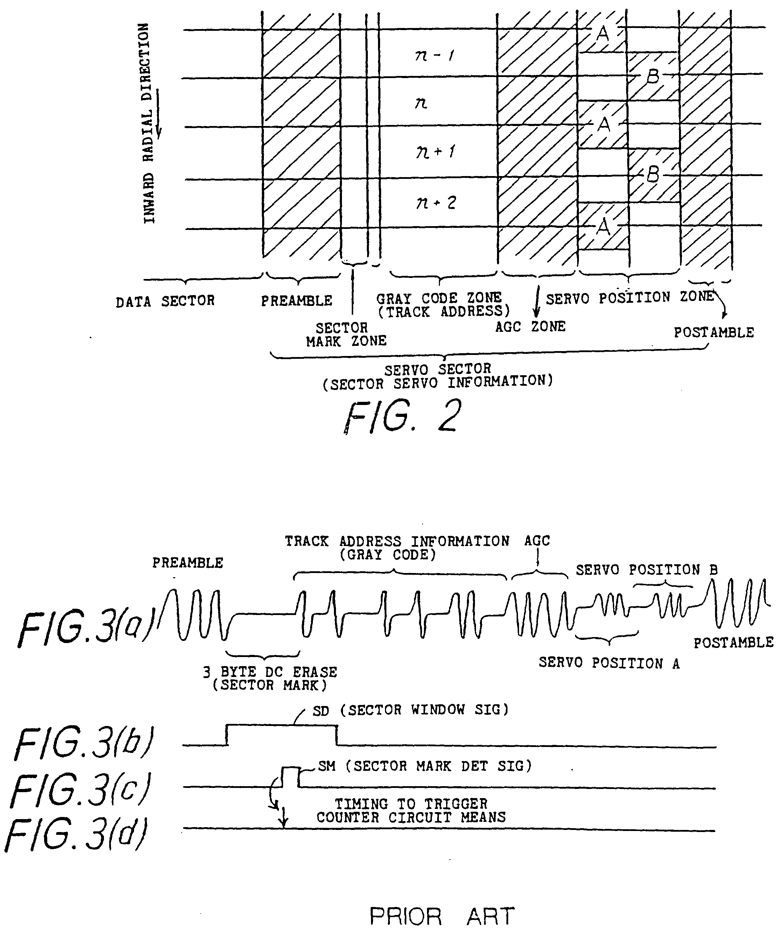

Fig. 2 shows schematically a portion of a plurality of tracks in one servo sector 10b, wherein sector servo information is divided into a plurality of zones. Only four tracks n-1, n, n+1 and n+2 are illustrated in Fig. 2, in which Figure the downward direction corresponds to an inward radial direction on a disk surface. The servo sector 10b comprises a plurality of zones such as preamble zone, sector mark zone, Gray code zone designating a track address, AGC zone, servo position A and B zones and postamble zone. Among these zones, preamble and postamble zones are provided to separate or distinguish sector servo information from work data information. The sector mark zone is utilised to provide an identification code for beginning the sector servo information.

An example of an output signal corresponding to servo information is schematically illustrated by the waveform of Fig. 3(a). The output corresponding to the sector mark is a DC erase pattern having a three byte length. The sector mark output is followed by track address information encoded as a Gray code sequence. Next, an AGC (automatic gain control) signal output follows, which is a regular sequence of codes such as 1, 1, ... 1, and is used to fix signal levels in associated circuits at a predetermined level. Finally, servo position A and B outputs follow thereafter.

As shown in Fig. 2, servo position information is recorded in tracks having a half track pitch deviation from tracks carrying other information. When a magnetic head travels in accurate alignment with a target track, the detected servo position outputs A and B have substantially the same level. However, when the magnetic head position deviates from the centre line of target track, the detected servo position outputs A and B have different signal levels, which are sensed and used for aligning the magnetic head.

In order to extract each item of information included in sector servo information from an output signal from a magnetic head, it is very important to generate a plurality of timing signals which are synchronous with the selected portions of the sector servo information. For generating the timing signals, counting circuit means, comprised in a demodulation circuit for sector servo information, are utilised and are set to start at an appropriate time t as shown in Fig. 3(d). The counting circuit means generate a specified signal, a so-called sector window signal, as shown in Fig. 3(b), during which a sector mark detection signal SM is (or should be) generated as shown in Fig. 3(c). The sector mark detection signal further triggers the counter circuit means at a time t and thus brings the counter circuit means into synchronisation with the sector servo information output signal.

Because the sector mark signal, the three byte DC erase pattern, should be detected during the sector window signal of Fig. 3(b), the sector window signal should be brought into synchronisation with the sector servo information.

In a previously proposed sector servo method, the synchronisation is obtained solely in dependence upon detection of the sector mark signal composed of the DC erase pattern of three bytes length. Though the DC erase pattern of three byte lengths is quite different from other series of code patterns, such as the work data recorded on disk surface, the detection of the sector mark signal can cause problems when the sector mark comprises or is affected by defects in the recording medium or the detection thereof is affected by external noise pulses.

If the sector mark signal cannot be detected, then the sector servo information cannot be detected and further, in some cases, the recorded sector servo information will be destroyed during a write operation of the disk system. Moreover, when the sector mark signal cannot be detected, the sector window signal goes out of synchronisation, which further increases difficulty in detecting the sector mark.

The following references (Japanese Unexamined Patent Publications) concern attempts to solve this problem:-
SHO-59-36374 dated 28th February 1984,
   by M. Tsunekawa et al;
SHO-63-142576 dated 14th June 1988,
   by K. Yamada.

EP-A-0 234 957 discloses a sector having: a sector mark SM, VFO SYNC, ID, VFO SYNC 10, SYNC 11 and DATA 12. There is no disclosure of the use of SM, VFO SYNC, or ID. The disclosure is particularly concerned with the detection of the SYNC 11 signal representing the top of the DATA 12 in a particular sector. It discloses that a particular form of SYNC 11 signal can be advantageous, offering more reliable detection of the beginning of data in a sector. Synchronisation is established by reading VFO SYNC 10 information, by means of a PLL circuit.

According to the present invention there is provided a method of detecting sector servo information from a signal reproduced by a magnetic head in a disk system, wherein the sector servo information is recorded in servo sectors interspersed with data sectors on the same tracks on a disk surface, the sector servo information comprising a sector mark, track address codes, AGC codes, servo position information, and
supplementary codes interspersed amongst the track address codes and the AGC codes, forming at least one auxiliary confirming code pattern,

the method comprises the steps of:
initially detecting the sector mark and generating a group of timing signals, the generation timings of the timing signals being controlled by counter circuit means, at least one timing signal being synchronised with the detection of the sector mark,
detecting the auxiliary confirming code pattern, the generation timings of the timing signals being adjusted by the counter circuit means based on further detection timings of the sector mark and the auxiliary confirming code pattern to obtain synchronous conditions of the timing signals with selected portions of the sector servo information,
detecting each portion of the sector servo information using said timing signals.

According to the present invention there is provided disk system apparatus comprising a disk on a disk surface of which sector servo information is recorded in servo sectors interspersed between data sectors on the same tracks, the sector servo information comprising a sector mark, a track address codes, AGC codes, servo position information, and supplementary codes recorded in each servo sector information, interspersed amongst the track address codes and the AGC codes, to form at least one auxiliary confirming code pattern, the apparatus further comprising a magnetic head for reproducing information recorded on said disk surface, and means for detecting the sector mark,
means for detecting said auxiliary confirming code pattern,
means for generating a group of timing signals, and means for initially generating at least one of those timing signals synchronously with detection of the sector mark, and
means for adjusting timing of generation of members of said group to be synchronous with selected portions of the sector servo information based on further detection timings of the sector mark and the auxiliary confirming code pattern.

An embodiment of the present invention can provide a method of detecting sector servo information even when noise affects detection of a sector mark.

An embodiment of the invention can provide a method of detecting sector servo information more precisely, even when noise effects hamper detection of a sector mark, wherein a plurality of timing signals are generated by setting counter circuit means at a predetermined value, the timing signals being synchronous with selected portions of the sector servo information and the detection of the sector servo information being checked by detecting an auxiliary confirming code pattern specially formed in the sector servo information.

An embodiment of the present invention can provide a method of detecting sector servo information still more precisely and reliably, even when noise effects hamper detection of a sector mark, wherein the timing signals are adjusted more precisely to be synchronous with the selected portions of the sector servo information by setting the counter circuit means at another predetermined value when the auxiliary confirming code pattern is detected.

In a sector servo method for a disk system, wherein sector servo information is recorded in servo sectors interspersed alternately with data sectors on the same tracks of a disk surface, the sector servo information comprising at least a sector mark, track address, and servo position information, a method according to an embodiment of the present invention comprises the steps of providing at least one auxiliary confirming code pattern in the sector servo information, discriminating the auxiliary confirming code pattern, besides the sector mark, from a signal reproduced by a magnetic head, and thereafter detecting the sector servo information.

Such a method according to an embodiment of the present invention may further comprise the steps of generating a group of timing signals from timing signal generator means controlled by counter circuit means which is set at a predetermined time when the sector mark and the auxiliary confirming code pattern are detected, and detecting selected portions of the sector servo information utilising the respective timing signals.

Such a method according to an embodiment of the present invention may still further comprise the steps of setting the counter circuit means at a first predetermined time when the sector mark is detected and setting a second predetermined time when the auxiliary confirming code pattern is detected.

Such a method according to an embodiment of the present invention may still further comprise the steps of forming first and second auxiliary confirming code patterns and setting the counter circuit means at a third predetermined time when the second auxiliary confirming code pattern is detected.

Reference is made, by way of example, to the accompanying drawings, in which:-
Fig. 1(a) is a schematic and block diagram of a disk system, for assistance in explaining the general principle of the sector servo method,
Fig. 1(b) illustrates a disk surface as employed in the sector servo method, where servo sectors and data sectors are formed alternately interleaved,
Fig. 2 illustrates schematically a portion of a servo sector wherein each track is divided into a plurality of zones,
Fig. 3(a) illustrates schematically the waveform of a signal reproduced from a previously proposed servo sector, and Figs. 3(b) to 3(d) show timing charts of signals related to detection of the sector servo information shown in Fig. 3(a),
Fig. 4 is a schematic block diagram for assistance in explaining principles of an embodiment of the present invention,
Fig. 5 is a schematic block diagram illustrating in outline a control circuit of a disk system operating in accordance with an embodiment of the present invention,
Fig. 6 is a flow chart illustrating starting steps in a disk system in accordance with an embodiment of the present invention,
Fig. 7 illustrates format of sector servo information in accordance with an embodiment of the present invention,
Fig. 8 is a detailed block diagram of a servo information demodulation circuit which can be employed in accordance with an embodiment of the present invention,
Fig. 9 is a further detailed block diagram of an erase detection circuit which can be employed in accordance with an embodiment of the present invention,
Fig. 10 is a further detailed block diagram of means for generating a group of timing signals which can be employed in accordance with an embodiment of the present invention, in which a counter circuit and a timing signal generation circuit are comprised,
Fig. 11(a) to 11(h) are timing charts, where Fig. 11(a) illustrates a reproduced signal and Figs. 11(b) to 11(h) are related signals for detecting sector servo information in accordance with an embodiment of the present invention,
Fig. 12 is a schematic diagram illustrating that a counter circuit which can be employed in accordance with an embodiment of the present invention is loaded with "0" at a time when a sector mark is detected and a sector window signal begins to rise when the counter circuit counts "N",
Fig. 13 is a schematic diagram illustrating that the counter circuit of Fig. 12 is loaded with "0" when the counter circuit counts "M" even if the sector mark cannot be detected,
Fig. 14 is a schematic diagram illustrating a case in which a check pattern provided in accordance with an embodiment of the present invention is detected when a shift register is full, and a check pattern detection signal CP is output,
Fig. 15 is a schematic diagram illustrating a case in which the check pattern is detected at a time delayed by one clock after the register full signal in a case in which noise is included before a check pattern signal, and
Fig. 16 is a schematic diagram illustrating that a timing pattern is detected and a timing pattern detection signal TP is output.

Explained briefly, an embodiment of the present invention provides for detection of servo sector information in servo sectors interleaved with work data sectors on one clock surface.

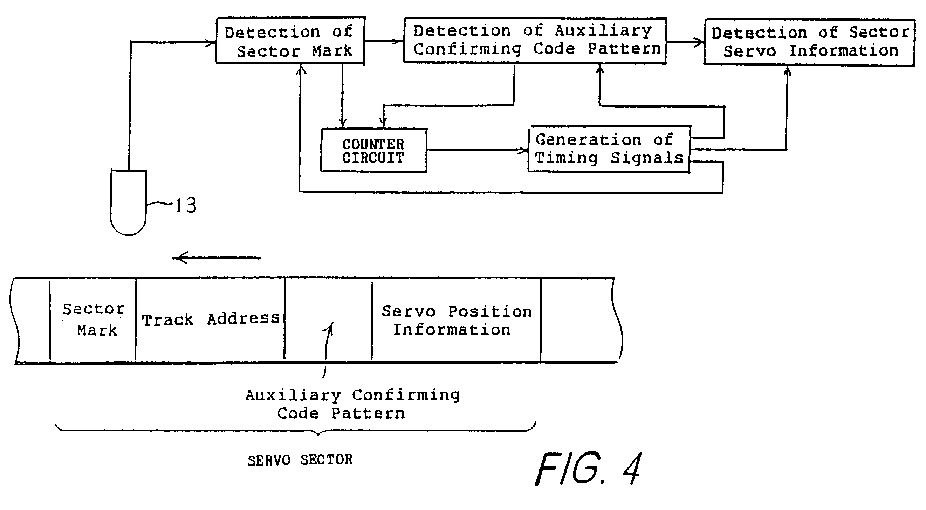

In the case illustrated in Fig. 4, which serves for assistance in explaining basic features of an embodiment of the present invention, a servo sector includes the following information: sector mark, track address, auxiliary confirming code pattern, servo position information. The servo sector is read by head 13. Respective portions, i.e. sector mark, auxiliary confirming code pattern and sector servo information, are detected using timing signals generated in dependence upon output of a counter circuit which is set in dependence upon detection of the sector mark and the auxiliary confirming code pattern.

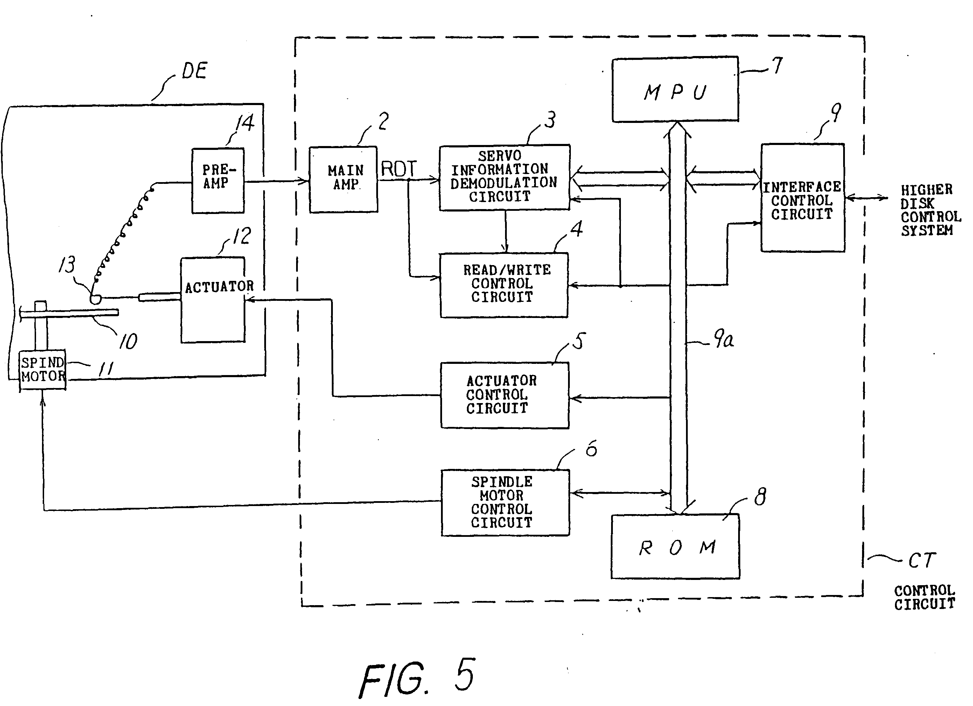

Principal circuit elements in a disk system related to an embodiment of the present invention and associated mechanical parts such as a spindle motor, actuator and magnetic head are shown in the block diagram of Fig. 5. Throughout the Figures, the same or similar reference signs relate to the same or similar parts.

A signal sensed by a magnetic head 13 is amplified by a pre-amplifier 14 and applied further to a main amplifier 2 included in a servo control circuit CT (surrounded by the broken line rectangle). A reproduced signal RDT is applied to a servo information demodulation circuit 3, to which the present invention is primarily related, where a sector mark and an auxiliary confirming code pattern are identified and detected from sector servo information and a group of synchronised timing signals are generated to be synchronous with occurrence of each constituent of the servo information.

The RDT signal is also applied to a read/write control circuit 4 which is operatively connected to the servo information demodulation circuit 3 and a bus line 9a. The read/write control circuit 4 controls recording/reproducing operations of magnetic head 13. An actuator control circuit 5 is connected to the bus line 9a and controls an actuator 12 for positioning magnetic head 13. A spindle motor control circuit 6 is also connected to the bus line 9a and controls rotation of a spindle motor 11 under command of a microprocessor unit 7. The microprocessor unit MPU 7 has functions to control all circuits such as the servo information demodulation circuit 3, read/write control circuit 4, actuator control circuit 5 and spindle motor control circuit 6. A memory circuit 8 including read only memory units stores necessary programs to operate the MPU 7 and associated circuits.

These circuits and units are connected mutually and to the bus line 9a. The bus line 9a is further connected to an interface control circuit 9 which is under the control of a higher level disk control system (not shown).

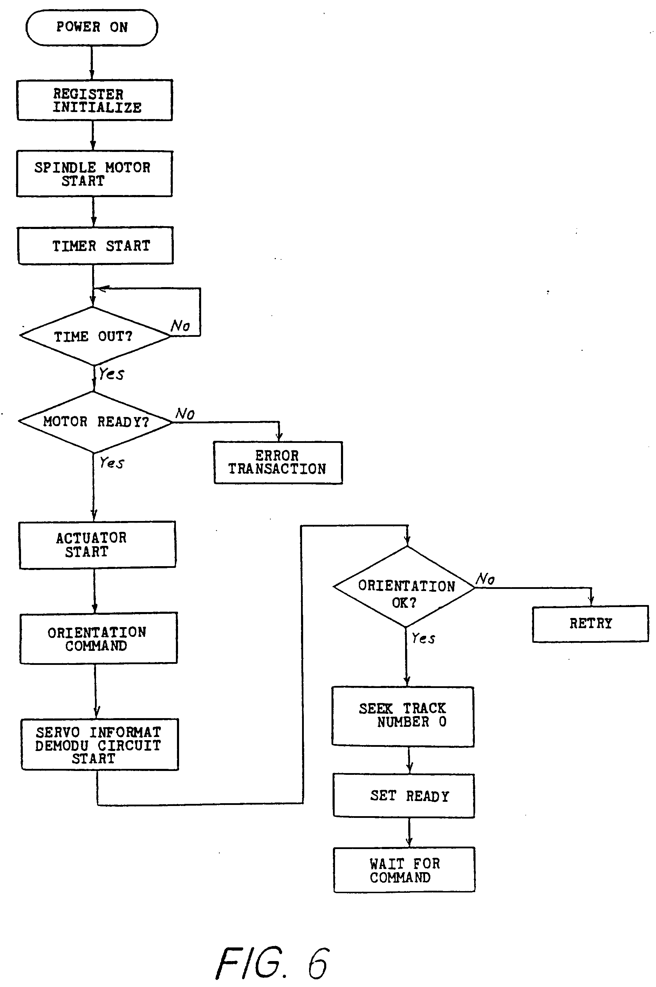

Fig. 6 is a flow chart of starting steps of a disk system in accordance with an embodiment of the present invention. the details of the steps will be explained with reference to Figs. 5 and 6.

(1) When a power source of the disk system is switched on, all registers used in the servo control circuit CT are cleared or initialised by the MPU 7, and the spindle motor 11 starts in response to a command from the spindle motor control circuit 6. At the same time, the MPU 7 commands a timer (not shown in Fig. 5) to start. After a predetermined elapse of time, MPU 7 checks whether or not the spindle motor control circuit 6 outputs a Motor Ready signal. If the Motor Ready signal is not output, MPU 7 gives a command to go to an Error Transaction branch because the spindle motor 11 has not reached a definite speed.

(2) When the spindle motor 11 reaches the normal rotation speed, the Motor Ready signal is output to the MPU 7 from the spindle motor control circuit 6. When the MPU 7 receives the Motor Ready signal, it gives a command to the actuator control circuit 5 for the magnetic head 13, initially positioned at a CSS zone (contact start stop zone, the innermost zone of the disk surface) to move towards a read/write zone on the disk surface.

(3) At this time, an orientation command OR is given to the servo information demodulation circuit 3 from the MPU 7. In response to the orientation command OR, an initial sector window signal is generated in the servo information demodulation circuit 3. An erase detection circuit comprised in the servo information demodulation circuit 3 detects a sector mark, and a counter circuit which is also comprised therein causes a timing signal generation circuit to generate timing signals. When a synchronised condition is obtained, such that the group of timing signals such as a servo window signal, sector window signal, servo gate signal, etc., are synchronous with an occurrence of signals corresponding to the respective selected portions of the sector servo information, an orientation OK command OROK is given to the MPU 7.

In generating timing signals, the sector mark and auxiliary confirming code pattern or patterns as mentioned in Fig. 4 are detected and checked, and the timing signals are adjusted to be synchronous with the selected portions of the sector servo information. In response to the command OROK, the MPU 7 becomes ready to receive sector servo information. The further detailed functions of the servo information demodulation circuit 3 are explained below.

(4) As explained in relation to step (3), when the synchronous condition is obtained, the servo information demodulation circuit 3 gives an orientation OK command OROK to the MPU 7, but when the synchronous condition is not obtained, the orientation OK command OROK is not issued and a retry procedure step is taken.

(5) Upon receipt of the OROK command, the MPU 7 gives a command to the actuator control circuit 5 to access track "0", which is the outermost peripheral track on the disk surface. The magnetic head 13 is made to move toward track "0" by actuator 12. When the track "0" is accessed, a Ready signal is set in the interface control circuit 9, which is made ready for receiving further commands from the higher disk control system.

The above steps (1) to (5) are carried out at a time when synchronisation of timing signals with the sector servo information is required, such as at the time when the power source is switched on. When once generation of synchronised timing signals is obtained, the orientation OK command OROK is applied to the MPU 7, and the MPU is ready to discriminate track address and servo position information and to control the magnetic head at or to correct locations.

Once the synchronous condition is acquired, the method involved in the embodiment of the present invention is resistant to deviations from synchronisation, because synchronisation is checked and adjusted a plurality of times by detecting sector mark and auxiliary confirming code patterns in the sector servo information.

Next, detailed circuit units, and the functions thereof, comprised in the servo information demodulation circuit 3 will be explained.

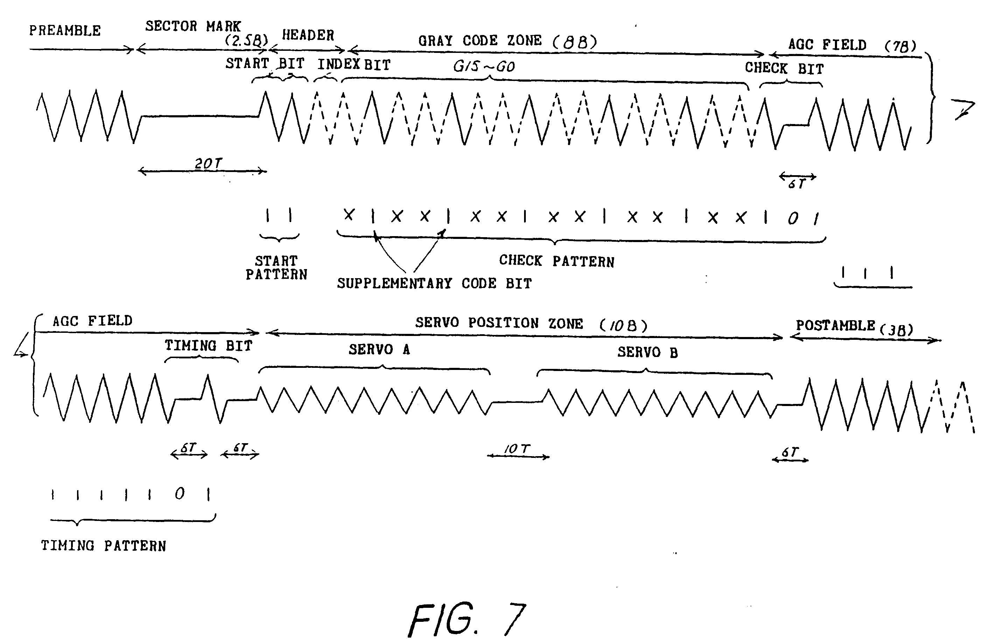

Fig. 7 shows one format of sector servo information which may be employed in accordance with an embodiment of the present invention. In Fig. 7, each bit signal is illustrated schematically by a triangular waveform for easy understanding of the signal pattern.

The sector servo information comprises a sector mark having an erase code pattern of a length corresponding to a 20T duration (herein T denotes one bit duration for recording one bit of work data), a header of 10T length, a Gray code zone of 64T length, an AGC field of 56 T length, a servo position zone of 80T length, and a postamble of 24 T length. In Fig. 7, these durations are expressed briefly using B units (byte units, 1B = 8T).

The sector mark is provided by the erase code pattern having 2.5B duration. The header comprises a pair of start bits, which give notice of the start of the Gray code zone.

In accordance with an embodiment of the present invention, the output from the Gray code zone is composed of 11 bit codes having the track address information (11 code bits giving track address information) expressed in the Gray code sequence, and further 5 bit codes of supplementary codes used for the auxiliary confirming code patterns (5 code bits as supplementary code bits serving as parts of the auxiliary confirming code pattern). The supplementary codes (bits of value "1") are arranged to have two successive Gray codes therebetween, denoted by "x", as shown in Fig. 7. The reason for using the supplementary codes is to avoid a misjudgment of a kind in which a track address having a Gray code sequence of all "0"s is detected as a sector mark having the erase pattern. By interspersing supplementary codes among the Gray code sequence, detection of the sector mark becomes more reliable and, moreover, the supplementary code sequence can be utilised as a part of the auxiliary confirming code pattern provided in the embodiment of the present invention.

The AGC field is composed of a check bit sequence of 3 bits of the pattern "1 0 1", an AGC bit sequence of 7 bits and a timing bit sequence of 3 bits of the pattern "1 0 1".

Each output of the servo A and servo B zones from the servo position zone is composed of a 9 bit sequence of constant codes (constant bit value) such as "1 1 ... 1". When the magnetic head travels along the centre line of the relevant track, the servo A and servo B output levels are the same, but when the magnetic head is displaced away from the track centre, the levels thereof are different, which is utilised to adjust the magnetic head position.

In this embodiment of the present invention, two auxiliary confirming code patterns are used and inserted in the sector servo information. A first auxiliary confirming code pattern is called a check pattern and a second is called a timing pattern in this embodiment (see Fig. 7). Because two auxiliary confirming code patterns are formed between the sector mark and the servo position zone, the method of detecting sector servo information of the embodiment is strongly resistant to noise comprised therein.

The check pattern is composed of 19 bit codes expressed by a sequence such as
"x 1 x x 1 x x 1 x x 1 x x 1 x x 1 0 1" as shown in Fig. 7, wherein "x" denotes one of the track address codes expressed in the Gray code sequence. Of the 19 bit codes, the first 16 bit codes are recorded in the Gray code zone and the last 3 bits, called the check bits, are recorded in the AGC field. The first 5 bits of value "1", with intervals of 2 "x" bits, are supplementary code bits of this embodiment of the present invention.

The timing pattern is composed of 10 bit codes expressed by the sequence "1 1 1 1 1 1 1 1 0 1". The first 7 bits are commonly used as the AGC bits. The last 3 bits, of pattern "1 0 1", are the timing bit sequence as explained.

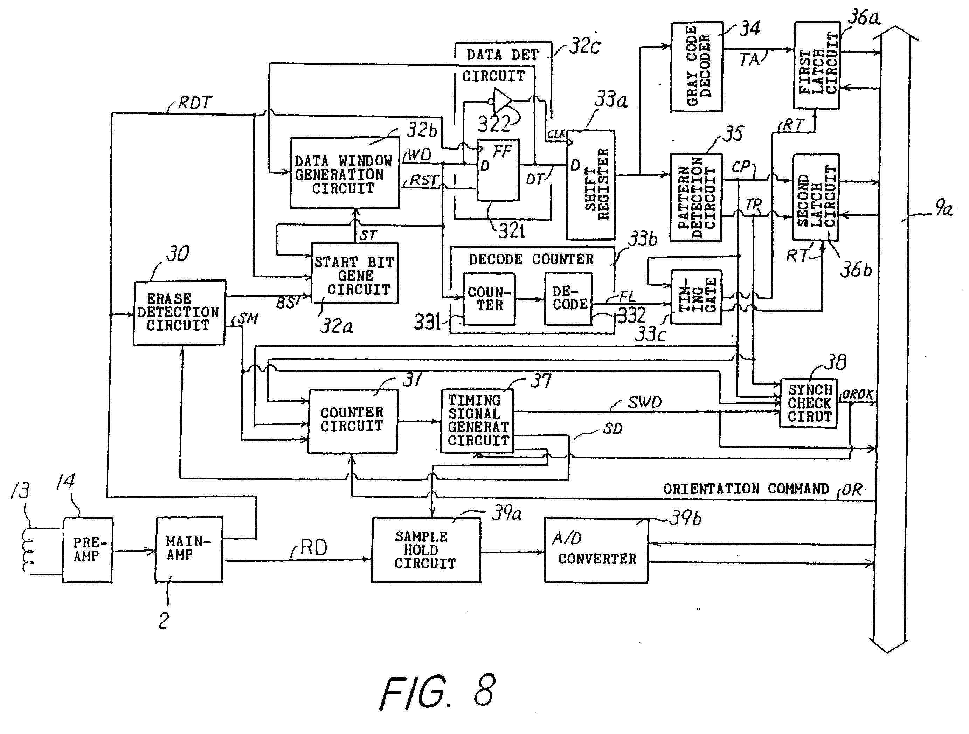

Fig. 8 is a detailed block diagram of the servo information demodulation circuit 3 of Fig. 5. The function of each element will be explained below.

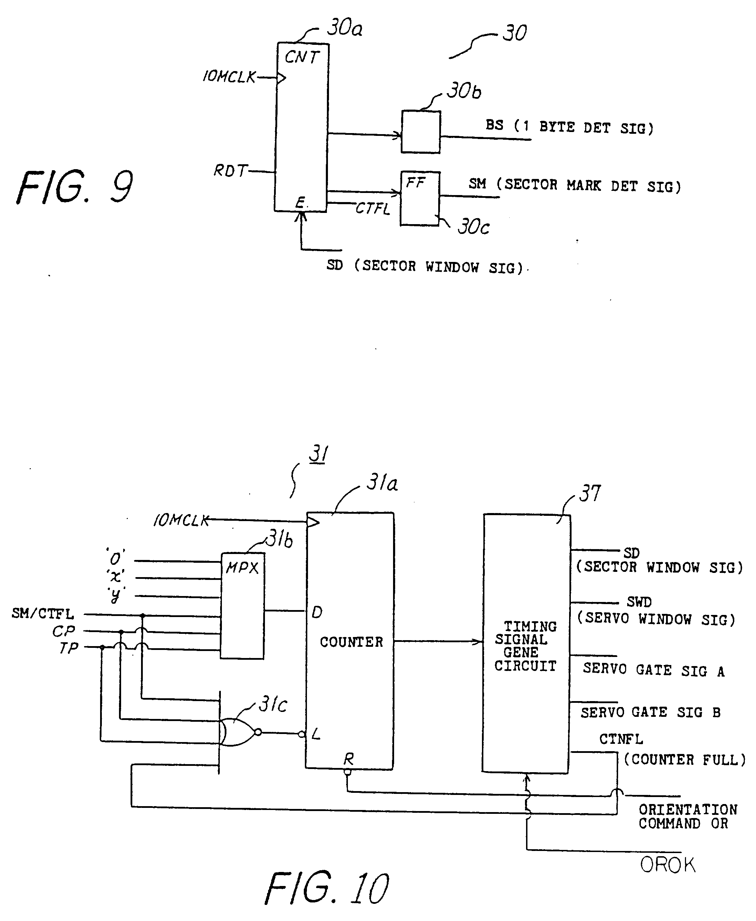

An erase detection circuit 30 has the functions of detecting 1 byte and 2 byte lengths of erase pattern of the sector mark during a sector window signal SD, which is one of the timing signals, and outputs a one byte detection signal BS and a sector mark detection signal SM respectively. The details of the erase detection circuit 30 are shown in Fig. 9, where a counter 30a, a latch circuit 30b and a flip-flop 30c are provided. A 10 MHz clock signal is input to the counter 30a which counts the number of clock signals (pulses). The counter 30a is enabled by the sector window signal SD and cleared by the RDT signal. When the counter 30a counts a number of clock pulses equivalent to one byte (8 bits) length, a one byte detection signal BS is output from the latch circuit 30b, and the signal BS is input to a start bit detection circuit 32a. When the counter 30a counts a number of clock pulses equivalent to a two byte length, it triggers flip-flop 30c. The sector mark detection signal SM, arranged into a pulse waveform, is output to a counter circuit 31.

The sector window signal SD in the above explanation is generated from counter circuit 31 and timing signal generation circuit 37, which are explained below.

The start bit detection circuit 32a detects a header code signal formed of a pair of start bits, after the byte detection signal BS from erase detection circuit 30 is input thereto. The start bit detection circuit 32a generates a demodulation start signal ST to a data window generation circuit 32b. The data window generation circuit 32b generates a data window signal WD which is a timing signal corresponding to each bit of the data signal (corresponding to the bit length of the data signal) in the RDT signal for detecting the same. Detection of the RDT is performed by a data detection circuit 32c comprising a flip-flop 321 and an inverter 322. The flip-flop 321 receives the RDT as a clock signal and the data window signal WD as a data signal.

The detected signal DT from the flip-flop 321 is input to a shift register 33a clocked by the inverted WD signal, where the detected signal DT is arranged and stored in series, and can be used as a parallel data sequence.

A decode counter 33b comprises a counter 331 for counting the WD signal and a decoder 332 which judges whether the counter 331 has reached a predetermined count number, such as one corresponding to a duration sufficient for the detected signal codes to fill the shift register 33a or not, and gives a signal to the following timing gate circuit 33c.

A pattern detection circuit 35 discriminates the check pattern of 19 bits and the timing pattern of 10 bits stored in the shift register 33a and outputs respectively a check pattern detection signal CP and timing pattern detection signal TP, and both CP and TP signals are latched in a second latch circuit 36b, which is connected to the bus line 9a, by a latch signal RT' output from the timing gate circuit 33c.

On the other hand, the Gray code information from the shift register 33a is decoded in a Gray code decoder 34 and is output as a binary code signal TA of (giving) the track address and latched in a first latch circuit 36a by the latch signal RT from the timing gate circuit 33c. The track address is given to the bus line 9a.

A group of timing signals are generated by the counter circuit 31 and timing signal generation circuit 37 which are briefly referred to previously. Details of the counter circuit 31 and timing signal generation circuit 37 are shown in Fig. 10. The counter circuit 31 comprises a counter 31a, a multiplexer 31b and an OR gate 31c in which the counter 31a is reset by an orientation command OR from the bus line 9a. The multiplexer 31b selects the data "0" and loads the data "0" into the counter 31a when the sector mark detection signal SM or a count full signal CTFL from the counter 30a in Fig. 9 is input thereto, and the SM and CTFL signals are also input to the OR gate 31c. The data "x" is loaded in the counter 31a when the check pattern detection signal CP is input to the multiplexer 31b and the OR gate 31c. Further, the data "y" is loaded into the counter 31a when the timing pattern detection signal TP is input to the multiplexer 31b. The timing signal generation circuit 37 generates a group of timing signals such as servo window signal SWD, sector window signal SD, servo gate signal A and servo gate signal B. The timing signal generation circuit 37 outputs also a count full signal CTNFL which is input to the OR gate 31c.

A synchronization check circuit 38 receives the check pattern detection signal CP, timing pattern detection signal TP, sector mark detection signal SM, and servo window signal SWD. The synchronization check circuit 38 outputs an orientation OK command OROK to the bus line 9a when inputs of these signals are detected twice successively.

A sample and hold circuit 39a retains peak values of the servo position signals A and B comprised in an analog signal RD from the main amplifier 2, utilising the servo gate signals A and B. An A/D converter 39b converts analog outputs corresponding to the peaks of servo position signals A and B to digital outputs which are applied to the bus line 9a.

As explained above, the servo information demodulation circuit 3 of the embodiment of the present invention comprises the erase (sector mark) detection circuit 30 and the pattern detection circuit 35 for detecting two auxiliary confirming code patterns such as the check pattern and timing pattern, both being recorded in the sector servo information. The timing signal generation circuit 37 generates the timing signals with the aid of the counter 31, by which the synchronous condition can be checked by reference to any of the sector mark, check pattern and timing pattern.

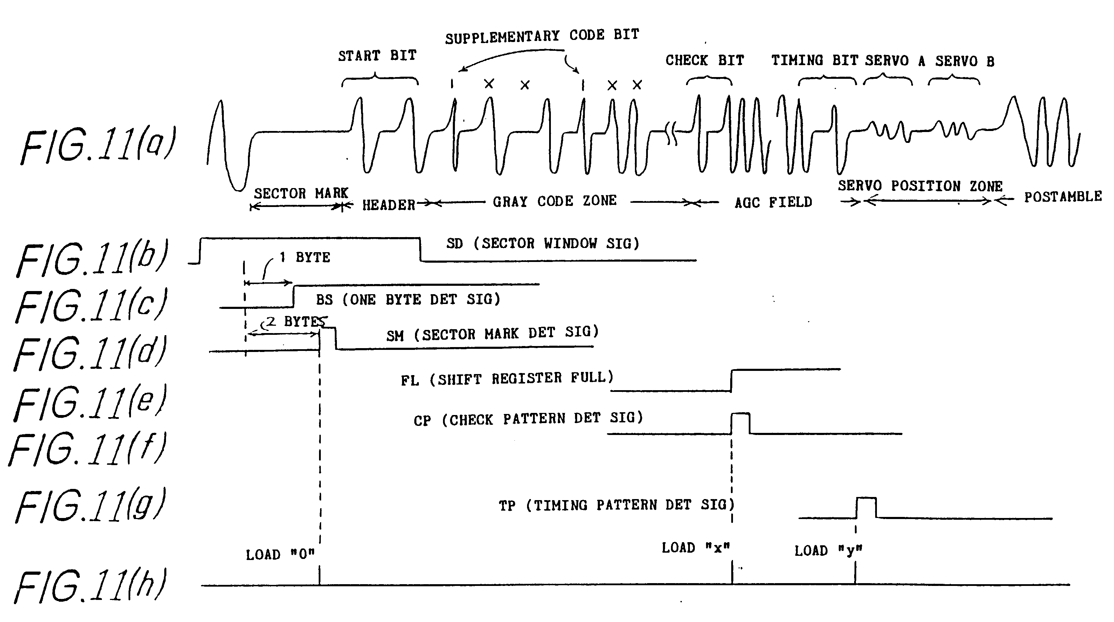

Next, detailed operation or functioning of the servo information demodulation circuit 3 of the embodiment will be explained with reference to Figs. 11 to 16.

(1) When the orientation command OR is given from the MPU 7 of Fig. 5, the counter circuit 31 and other registers are all reset or cleared. The erase detection circuit 30 begins to search for a sector mark having an erase pattern utilising an initial sector window signal output (Fig. 11(b)) from the timing signal generation circuit 37 in response to the OR command.

(2) When the erase detection circuit 30 detects an erase pattern of 8 bit (one byte) length, it outputs the byte detection signal BS (Fig. 11(c)) to the start bit detection circuit 32a, which is made to be active.

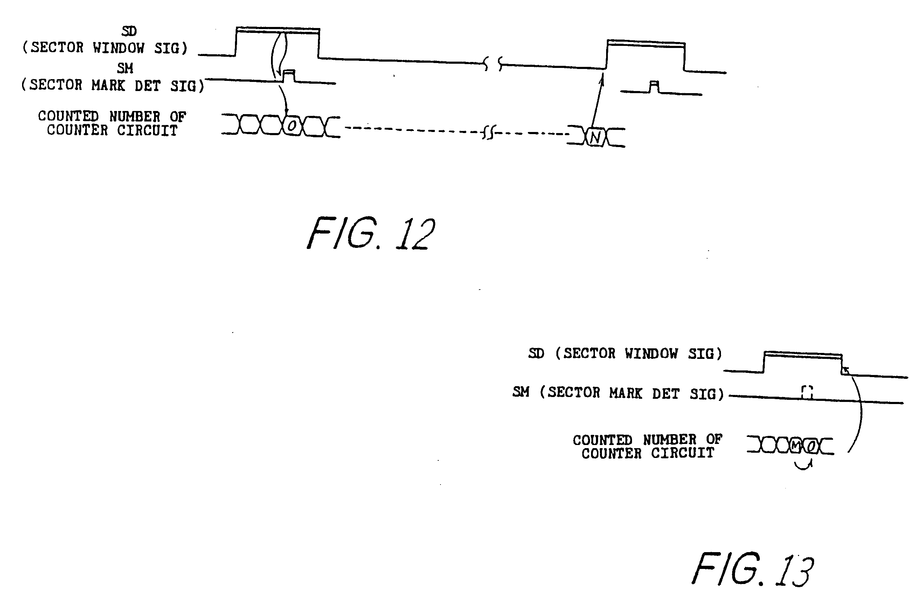

When the erase detection circuit 30 detects an erase pattern of two bytes length, it outputs the sector mark detection signal SM (Fig. 11(d)). The counter circuit 31a of Fig. 10 is loaded with the initial data "0" as shown in Figs. 11(d) and 11(h), and it starts to count. When the counter circuit has counted a predetermined number N, a next sector window signal Sd is caused to rise, as shown in Fig. 12.

Even when the erase detection circuit 30 cannot detect an erase pattern of two bytes length and sector mark detection signal SM is not generated during the sector window signal SD, the counter full signal CTFL from the counter 30a in Fig. 9 loads the data "0" into the counter circuit 31a when the count number reaches a predetermined number M as shown in Fig. 13, and it starts to count from "0".

(3) When the start bit detection circuit 32a receives the byte detection signal BS, it begins to check the RDT signal and detects a pair of pulses forming the start bit, and further generates the demodulation start signal ST.

When the data window generation circuit 32b receives the ST signal, it generates the data window signal WD, which is loaded to the flip-flop 321 resulting in the output of the detected signal DT. The detected signal DT has a reproduced waveform having high and low levels expressed by "1" and "0" which correspond to existence and non-existence respectively of pulses in the RDT signal. The signal DT is input to the shift register 33a, which has a length for example of 20 bits.

(4) The decode counter 33b counts the number of pulses in the data window signal WD and, when it counts the predetermined number, the timing gate circuit 33c applies the latch signals RT and RT' to the first and second latch circuits 36a and 36b.

The Gray code decoder 34 decodes the Gray code sequence into the binary code sequence TA of (identifying) the track address which is latched in the first latch circuit 36a. The microprocessor MPU 7 can identify the track address through the bus line 9a.

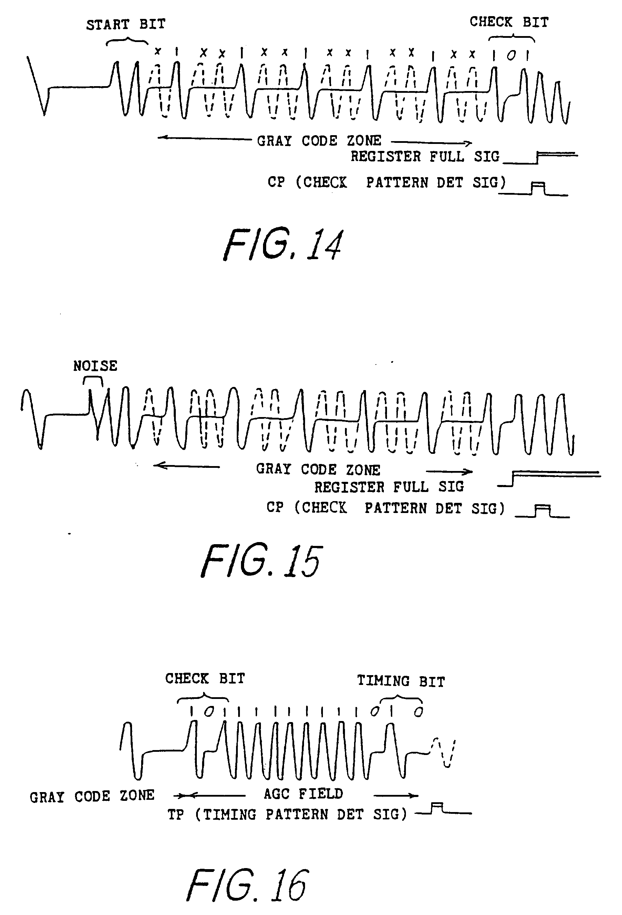

(5) On the other hand, the shift register 33a is operatively connected to the pattern detection circuit 35, where the check pattern comprising 5 supplementary bits and 3 check bits is monitored and checked. In the case illustrated in Fig. 14, the check pattern can be detected at the time when the decode counter 33b has decoded, for example, the number of counts needed for filling up the shift register (Fig. 11(e)). At this time, the check pattern detection signal CP is output and the counter circuit 31 is loaded with the data "x" and starts to count from data "x" as shown in Figs. 11(f) and 11(h).

The check pattern detection is also latched in the second latch circuit 36b and the MPU is ready to identify.

(6) In the case of Fig. 14, the check pattern can be identified at the time when the shift register is full. However, when the RDT signal is affected by preceding noise, before the check pattern codes, such as is shown in Fig. 15, the check pattern cannot be identified at the time when the shift register full signal FL (Fig. 11(e)) is output. In the case of Fig. 15, the check pattern can be identified if detection of the check pattern is carried out at a time delayed by one clock.

In this case, therefore, the time delayed by one clock is regarded as the proper time for the timing gate circuit 33c to issue the latch signal RT to the first latch circuit 36a, and thereby the correct binary code of the track address is latched therein. At the same time, the counter circuit 31 is loaded with the data "x" when the check pattern is correctly identified. Thus, the embodiment of the present invention can avoid or mitigate the effects of noise.

If the check pattern is not identified, the counter circuit 31 is not loaded with the data "x".

(7) The shift register 33a continues to operate and the pattern detection circuit 35 searches for the timing pattern from the stored data in the shift register 33a. When the timing pattern is detected as shown in Fig. 16, the timing pattern detection signal TP is output. With the signal TP, the counter circuit 31 is loaded with the data "y" as shown in Figs. 11(g) and 11(h).

The timing pattern detection is latched in the second latch circuit 36b, and the MPU is ready to identify. If the timing pattern is not identified, the counter circuit 31 is not loaded with the data "y".

On the other hand, the synchronisation check circuit 38 outputs the orientation OK command OROK to the MPU 7 when three detection signals, the sector mark detection signal SM, check pattern detection signal CP, and timing pattern detection signal TP, are detected twice successively in two servo sectors.

Loaded data in the counter circuit 31 is adjusted or revised each time a sector mark, check pattern and timing pattern is detected. However, the OROK command is issued only after the sector mark, check pattern and timing pattern are detected twice.

In the embodiment of the present invention, the synchronous condition is checked strictly using three code patterns at an initial stage in generating a group of timing signals which are synchronous with the selected portion of the sector servo information. However, when the synchronous condition is once obtained, adjustment of synchronisation is carried out by reference to any one of three code patterns for avoiding effects of noise, because the method of the embodiment of the invention has redundancy.

Therefore, in order to establish the synchronous condition by a command of orientation command OR, all three patterns of sector mark, check pattern and timing pattern are checked. Thereafter, the subsequent maintenance of synchronisation, in other words, the adjustment of loaded data in the counter circuit 31 is checked by any one of three patterns.

At the time when the orientation OK command OROK is output to the MPU 7, the servo information demodulation circuit 3 is generating a group of timing signals such as servo window signal SWD, sector window signal SD, and servo gate signals A and B, and these timing signals are synchronous with the selected portion of the sector servo information.

The MPU utilises the detected signals and controls the positioning of the magnetic head.

In the above embodiment, the auxiliary confirming code pattern can be recorded without a basic change in the format of the sector servo information as previously proposed in the art. As the auxiliary confirming code pattern, two patterns (the check pattern and the timing pattern) are provided in the embodiment. These two patterns and the sector mark are formed in separate zones in the servo sector, and therefore detection of the sector servo information and adjustment of synchronisation of timing signals are possible even when noise is comprehended in a specific portion of the detected signal such as the sector mark, Gray code and AGC code signals.

In the above embodiment of the present invention, the sector servo information uses the format shown in Fig. 7. However, the present invention is not restricted to this format: other formats may be used.

Embodiments of the present invention may also be provided in which only one auxiliary confirming code pattern is included in the sector servo information or three auxiliary confirming code patterns are included therein.

Further, the check pattern and timing pattern are independently checked in the above-described embodiment, but the patterns may be combined and checked at one time in other embodiments.

An embodiment of the present invention provides a sector servo method of detecting sector servo information in a disk system, wherein the sector servo information comprises at least one auxiliary confirming code pattern besides conventionally used sector mark, track address and servo position information. Generation of a group of timing signals to detect a selected portion of the sector servo information is adjusted such that the timing signal is synchronous with the selected portion of the sector servo information by detecting the auxiliary confirming code pattern. Synchronisation is performed by loading a predetermined number into counter circuit means when the auxiliary confirming code pattern is detected.

## Claims

1. A method of detecting sector servo information from a signal reproduced by a magnetic head (13) in a disk system, wherein the sector servo information is recorded in servo sectors (10b) interspersed with data sectors (10a) on the same tracks on a disk surface, the sector servo information comprising a sector mark, track address codes, AGC codes, servo position information, and
supplementary codes interspersed amongst the track address codes and the AGC codes, forming at least one auxiliary confirming code pattern,
the method comprises the steps of:
initially detecting (30) the sector mark and generating (37) a group of timing signals, the generation timings of the timing signals being controlled by counter circuit means (31), at least one timing signal being synchronised with the detection (SM) of the sector mark,
detecting (35) the auxiliary confirming code pattern, the generation timings of the timing signals being adjusted by the counter circuit means (31) based on further detection timings of the sector mark (SM) and the auxiliary confirming code pattern (CP,TP) to obtain synchronous conditions of the timing signals with selected portions of the sector servo information,
detecting (3) each portion of the sector servo information using said timing signals.

2. A method as claimed in claim 1, comprising providing a plurality of auxiliary confirming code patterns.

3. A method as claimed in claim 1 or 2, wherein two auxiliary confirming code patterns are provided, a first auxiliary confirming code pattern comprising a plurality of track address codes, a plurality of supplementary codes interspersed among the track address codes, and check bits, and a second auxiliary confirming code pattern comprising a plurality of AGC codes and timing bits.

4. A method as claimed in claim 2, wherein each of said auxiliary confirming code patterns is formed separated from each other in the servo sector.

5. A method as claimed in claim 1, 2, 3 or 4, wherein means for generation of said group of timing signals comprises the counter circuit means (31) and a timing signal generator circuit (37), and wherein said timing adjustment of the generation of said group of timing signals is performed by loading a predetermined number to the counter circuit at a time when the auxiliary confirming code pattern is detected.

6. A method as claimed in claim 5, wherein said timing adjustment of the generation of said group of timing signals is performed by loading a predetermined number to the counter circuit at each time when the sector mark and the auxiliary confirming code pattern are detected.

7. A method as claimed in claim 6, wherein said timing adjustment comprises first timing adjustment when the sector mark and the auxiliary confirming code pattern are detected and second timing adjustment when either one of the sector mark and the auxiliary confirming code pattern is detected.

8. A method as claimed in claim 7, wherein said first timing adjustment, performed by loading the predetermined number into the counter circuit, further comprises subsequent identification of each of the sector mark and the auxiliary confirming code pattern at a time when the counter circuit counts said respective predetermined number.

9. A method as claimed in any preceding claim, wherein said track address is encoded in a Gray code sequence and said auxiliary confirming code pattern includes a plurality of supplementary codes, for example of value "1", interspersed among the codes of the Gray code sequence.

10. Disk system apparatus comprising a disk (10) on a disk surface of which sector servo information is recorded in servo sectors (10b) interspersed between data sectors (10a) on the same tracks, the sector servo information comprising a sector mark, a track address codes, AGC codes, servo position information, and supplementary codes recorded in each servo sector information, interspersed amongst the track address codes and the AGC codes, to form at least one auxiliary confirming code pattern, the apparatus further comprising a magnetic head (13) for reproducing information recorded on said disk surface, and means (3) for detecting the sector mark,
means (35) for detecting said auxiliary confirming code pattern,
means (37) for generating a group of timing signals, and means (31) for initially generating at least one of those timing signals synchronously with detection (SM) of the sector mark, and
means (31, 37) for adjusting timing of generation of members of said group to be synchronous with selected portions of the sector servo information based on further detection timings of the sector mark (SM) and the auxiliary confirming code pattern (CP,TP).

## Patentansprüche

1. Verfahren zur Erfassung von Sektor-Servoinformation aus einem Signal, das durch einen Magnetkopf (13) in einem Plattensystem wiedergegeben wird, worin die Sektor-Servoinformation in Servosektoren (10b) aufgezeichnet ist, welche mit Datensektoren (10a) auf denselben Spuren auf einer Plattenoberfläche verteilt sind, welche Sektor-Servoinformation eine Sektormarkierung, Spuradreß-Codes, AGC-Codes, Servo-Positionsinformation und Ergänzungscodes umfaßt, die zwischen den Spuradreß-Codes und den AGC-Codes verteilt sind und mindestens ein Hilfsbestätigungs-Codemuster bilden,
welches Verfahren die Schritte umfaßt:
anfängliche Erfassung (30) der Sektormarkierung und Erzeugung (37) einer Gruppe von Zeitsignalen, welche Erzeugungszeitabläufe von den Zeitsignalen durch Zählerschaltungsmittel (31) gesteuert werden, wobei mindestens ein Zeitsignal mit der Erfassung (SM) von der Sektormarkierung synchronisiert ist,
Erfassung (35) des Hilfsbestätigungs-Codemusters, welche Erzeugungszeitabläufe von den Zeitsignalen durch die Zählerschaltungsmittel (31) auf der Grundlage einer weiteren Erfassung von Zeitabläufen von der Sektormarkierung (SM) und dem Hilfsbestätigungs-Codemuster (CP, TP) eingestellt werden, um synchrone Zustände von den Zeitsignalen mit ausgewählten Bereichen von der Sektor-Servoinformation zu erhalten,
Erfassung (3) jedes Bereichs von der Sektor-Servoinformation unter Verwendung der Zeitsignale.

2. Verfahren gemäß Anspruch 1, das die Bereitstellung einer Vielzahl von Hilfsbestätigungs-Codemustern umfaßt.

3. Verfahren gemäß Anspruch 1 oder 2, bei dem zwei Hilfsbestätigungs-Codemuster bereitgestellt werden, wobei ein erstes Hilfsbestätigungs-Codemuster eine Vielzahl von Spuradreß-Codes, eine Vielzahl von Ergänzungscodes, welche zwischen den Spuradreß-Codes verteilt sind, und Kontroll-Bits umfaßt, und wobei ein zweites Hilfsbestätigungs-Codemuster eine Vielzahl von AGC-Codes und Zeit-Bits umfaßt.

4. Verfahren gemäß Anspruch 2, bei dem jedes der Hilfsbestätigungs-Codemuster voneinander getrennt in dem Servosektor gebildet wird.

5. Verfahren gemäß Anspruch 1, 2, 3 oder 4, bei dem Mittel zur Erzeugung der Gruppe von Zeitsignalen die Zählerschaltungsmittel (31) und eine Zeitsignal-Erzeugungsschaltung (37) umfaßt und bei der die Zeiteinstellung von der Erzeugung von der Gruppe von Zeitsignalen durch Laden einer vorbestimmten Zahl zu einem Zeitpunkt in die Zählerschaltung ausgeführt wird, wenn das Hilfsbestätigungs-Codemuster erfaßt wird.

6. Verfahren gemäß Anspruch 5, bei dem die Zeiteinstellung von der Erzeugung der Gruppe von Zeitsignalen durch Laden einer vorbestimmten Zahl in die Zählerschaltung zu jedem Zeitpunkt durchgeführt wird, wenn die Sektormarkierung und das Hilfsbestätigungs-Codemuster erfaßt werden.

7. Verfahren gemäß Anspruch 6, bei dem die Zeiteinstellung eine erste Zeiteinstellung, wenn die Sektormarkierung und das Hilfsbestätigungs-Codemuster erfaßt werden, und eine zweite Zeiteinstellung umfaßt, wenn eines von der Sektormarkierung und dem Hilfsbestätigungs-Codemuster erfaßt wird.

8. Verfahren gemäß Anspruch 7, bei dem die erste Zeiteinstellung, die durch Laden der vorbestimmten Zahl in die Zählerschaltung durchgeführt wird, ferner die folgende Identifizierung von jedem von der Sektormarkierung und dem Hilfsbestätigungs-Codemuster zu einem Zeitpunkt umfaßt, wenn die Zählerschaltung die entsprechende vorbestimmte Zahl zählt.

9. Verfahren gemäß einem der vorhergehenden Ansprüche, bei dem die Spuradresse in eine Gray-Code-Sequenz kodiert ist und das Hilfsbestätigungs-Codemuster eine Vielzahl von Ergänzungscodes, z. B. vom Wert "1" enthält, die zwischen den Codes von der Gray-Code-Sequenz verteilt sind.

10. Plattensystemvorrichtung, die eine Platte (10) umfaßt, wobei auf einer Plattenoberfläche von dieser Sektor-Servoinformation in Servosektoren (10b) aufgezeichnet ist, die zwischen Datensektoren (10a) auf denselben Spuren verteilt sind, welche Sektor-Servoinformation eine Sektormarkierung, Spuradreß-Codes, AGC-Codes, Servo-Positionsinformation und Ergänzungscodes umfaßt, die in jeder der Sektor-Servoinformation aufgezeichnet ist, welche zwischen den Spuradreß-Codes und den AGC-Codes verteilt sind, um mindestens ein Hilfsbestätigungs-Codemuster zu bilden, welche Vorrichtung ferner umfaßt einen Magnetkopf (13) zur Wiedergabe von Information, die auf der Plattenoberfläche aufgezeichnet ist und Mittel (3) zur Erfassung der Sektormarkierung,
Mittel (35) zur Erfassung des Hilfsbestätigungs-Codemusters,
Mittel (37) zur Erzeugung einer Gruppe von Zeitsignalen, und Mittel (31) zur anfänglichen Erzeugung von mindestens einem von diesen Zeitsignalen synchron mit der Erfassung (SM) von der Sektormarkierung, und
Mittel (31, 37) zur Einstellung des Zeitablaufs der Erzeugung von Mitgliedern der Gruppe, um synchron zu ausgewählten Bereichen von der Sektor-Servoinformation auf der Grundlage einer weiteren Erfassung von Zeitabläufen der Sektormarkierung (SM) und der Hilfsbestätigungs-Codemusters (CP, TP) zu sein.

## Revendications

1. Procédé de détection d'informations de secteur d'asservissement à partir d'un signal reproduit par une tête magnétique (13) dans un système à disque, dans lequel les informations de secteur d'asservissement sont enregistrées dans des secteurs d'asservissement (10b) entremêlés aux secteurs de données (10a) sur les mêmes pistes sur une surface de disque, les informations de secteur d'asservissement comprenant une marque de secteur, des codes d'adresse de piste, des codes AGC, et des informations de position d'asservissement, et
des codes supplémentaires entremêlés parmi les codes d'adresse de piste et les codes AGC, formant au moins une structure de code de confirmation auxiliaire,
le procédé comprend les étapes de :
détection initialement (30) de la marque de secteur et génération (31) d'un groupe de signaux de temporisation, la génération des temporisations des signaux de temporisation étant commandée par un dispositif de circuit de comptage (31), au moins un signal de temporisation étant synchronisé avec la détection (SM) de la marque de secteur,
détection (35) de la structure de code de confirmation auxiliaire, la génération de temporisations des signaux de temporisation étant ajustée par le dispositif de circuit de comptage (31) sur la base de détection de temporisations en plus de la marque de secteur (SM) et de la structure de code de confirmation auxiliaire (CP, TP) pour obtenir des conditions synchrones des signaux de temporisation avec des parties sélectionnées des informations de secteur d'asservissement,
détection (3) de chaque partie des informations de secteur d'asservissement en utilisant lesdits signaux de temporisation.

2. Procédé selon la revendication 1, comprenant la fourniture d'une pluralité de structures de code de confirmation auxiliaire.

3. Procédé selon la revendication 1 ou 2, dans lequel deux structures de code de confirmation auxiliaire sont fournies, une première structure de code de confirmation auxiliaire comprenant une pluralité de codes d'adresse de piste, une pluralité de codes supplémentaires entremêlés parmi les codes d'adresse de piste, et les bits de contrôle, et une seconde structure de code de confirmation auxiliaire comprenant une pluralité de codes AGC et de bits de temporisation.

4. Procédé selon la revendication 2, dans lequel chacune desdites structures de code de confirmation auxiliaire est formée séparément les unes des autres dans le secteur d'asservissement.

5. Procédé selon la revendication 1, 2, 3 ou 4, dans lequel un dispositif pour générer ledit groupe de signaux de temporisation comprend le dispositif de circuit de comptage (31) et un circuit générateur de signal de temporisation (37), et dans lequel ledit réglage de temporisation de génération dudit groupe de signaux de temporisation est réalisé en chargeant un nombre prédéterminé sur le circuit de comptage à un instant lorsque la structure de code de confirmation auxiliaire est détectée.

6. Procédé selon la revendication 5, dans lequel ledit réglage de temporisation de la génération dudit groupe de signaux de temporisation est réalisé en chargeant un nombre prédéterminé sur le circuit de comptage à chaque fois que la marque de secteur et la structure de code de confirmation auxiliaire sont détectées.

7. Procédé selon la revendication 6, dans lequel ledit réglage de temporisation comprend un premier réglage de temporisation lorsque la marque de secteur et la structure de code de confirmation auxiliaire sont détectées et un second réglage de temporisation lorsque soit la marque de secteur soit la structure de code de confirmation auxiliaire est détectée.

8. Procédé selon la revendication 7, dans lequel ledit premier réglage de temporisation, réalisé en chargeant le nombre prédéterminé dans le circuit de comptage, comprend en outre une identification ultérieure de la marque de secteur et de la structure de code de confirmation auxiliaire chaque fois que le circuit de comptage compte ledit nombre prédéterminé respectif.

9. Procédé selon l'une quelconque des revendications précédentes, dans lequel ladite adresse de piste est codée dans une séquence de codes Gray et ladite structure de code de confirmation auxiliaire comprend une pluralité de codes supplémentaires, par exemple une valeur "1", entremêlée parmi les codes de séquence de codes Gray.

10. Appareil de système à disque comprenant un disque (10) ayant une surface de disque sur laquelle des informations de secteur d'asservissement sont enregistrées dans des secteurs d'asservissement (10b) entremêlés entre des secteurs de données (10a) sur les mêmes pistes, les informations de secteur d'asservissement comprenant une marque de secteur, des codes d'adresse de piste, des codes AGC, des informations de position d'asservissement, et des codes supplémentaires enregistrés dans chaque information de secteur d'asservissement, entremêlés parmi les codes d'adresse de piste et les codes AGC, pour former au moins une structure de code de confirmation auxiliaire, l'appareil comprenant en outre une tête magnétique (13) pour reproduire des informations enregistrées sur ladite surface de disque, et un dispositif (3) pour détecter la marque de secteur,
un dispositif (35) pour détecter ladite structure de code de confirmation auxiliaire,
un dispositif (37) pour générer un groupe de signaux de temporisation, et un dispositif (31) pour générer initialement au moins un de ces signaux de temporisation de façon synchrone avec la détection (SM) de la marque de secteur, et
un dispositif (31, 37) pour ajuster la temporisation de génération des éléments dudit groupe pour être synchrone avec les parties sélectionnées des informations de secteur d'asservissement sur la base de détection de temporisations en plus de la marque de secteur (SM) et de la structure de code de confirmation auxiliaire (CP, TP).
